# EUROPEAN PATENT SPECIFICATION

(11) **EP 4 087 270 B1**
(45) Date of publication and mention of the grant of the patent: **12.06.2024**
(21) Application number: 20911221.8
(22) Date of filing: 25.12.2020
(51) Int. Cl.: H04Q 11/00

(54) **ONU MANAGEMENT METHOD, APPARATUS, DEVICE, AND SYSTEM, AND COMPUTER READABLE STORAGE MEDIUM**
ONU VERWALTUNGSVERFAHREN, -GERÄT, -VORRICHTUNG UND -SYSTEM SOWIE COMPUTERLESBARES SPEICHERMEDIUM
PROCÉDÉ, APPAREIL, DISPOSITIF ET SYSTÈME DE GESTION D'ONU, AINSI QUE SUPPORT DE STOCKAGE LISIBLE PAR ORDINATEUR

(30) Priority: 02.01.2020 CN 202010002166
(43) Date of publication of application: 09.11.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHOU, Wenhui, Beijing 100053 (CN); LI, Han, Beijing 100053 (CN); HU, Xintian, Beijing 100053 (CN)
(74) Representative: J A Kemp LLP
(86) International application number: PCT/CN2020/139455
(87) International publication number: WO 2021/136092

(56) References cited:
- EP-A1- 3 422 732
- WO-A1-2017/177619
- WO-A1-2021/008496
- CN-A- 104 243 298
- CN-A- 107 294 753
- CN-A- 111 083 576
- US-A1- 2019 349 086

## Description

### CROSS-REFERENCE TO RELATED APPLICATION

The present application is based upon and claims priority to Chinese Patent Application No. 202010002166.2, filed on January 2, 2020.

### TECHNICAL FIELD

The present disclosure relates to the technical field of fiber access networks, and relates to, but is not limited to, an Optical Network Unit (ONU) configuration method, a device system, and a computer-readable storage medium.

### BACKGROUND

With the development of cloud computing, a Software Defined Network (SDN) and a network function virtualization technology, transfer control separation, centralized management and control, cloud-enabled and software-enabled management and control platform become the future development trend of fixed network access technology architecture.

In the related art, Gigabit-Capable Passive Optical Networks (GPON) access network mainly includes one or more Optical Line Terminal (OLT) devices and ONU devices. The configuration, management and control of the ONU device are implemented through an ONU Management and Control Interface (OMCI) management and control module of the OLT device. OLT devices are usually produced by different manufacturers, and OMCI management and control modules of different manufacturers have inconsistent understanding on the standard, which may cause compatibility problems when the ONU device is connected with the OLT devices of different manufacturers, and also case the high cost of ONU upgrade, maintenance and version unification, and a long upgrade cycle when the upgrade is performed.

WO 2021/008496 A1 provides an optical network unit management method, including: receiving a first ONU management message sent by a management system, sending the first ONU management message to a vOMCI functional entity, receiving first OMCI information sent by the vOMCI functional entity and sending the first OMCI information to the first ONU. WO 2017/177619 A1 provides an SDN/NFV open access network system, including a vOLT, an access network device with an Openflow switching capability, and an ONU.

### SUMMARY

The invention is set out in the appended set of claims. Embodiments of the present disclosure are intended to provide an ONU management method, apparatus, device, and system, and a computer-readable storage medium.

The technical solutions of the embodiments of the present disclosure are implemented as follows.

The embodiments of the present disclosure provide an ONU management method according to claim 1. Optional features are set out in dependent claims 2 to 5.

The embodiments of the present disclosure further provide an ONU management method according to claim 6. Optional features are set out in dependent claims 7 to 8.

The embodiments of the present disclosure provide an ONU management device according to claim 9.

The embodiments of the present disclosure provide an ONU management system according to claim 10. Optional features are set out in dependent claims 11 to 14.

The embodiments of the present disclosure provide a computer-readable storage medium according to claim 15.

The embodiments of the present disclosure provide an ONU management method, apparatus, device, and system. When receiving a management and control task, a management and control subsystem sends the management and control task to a corresponding OMCI subsystem based on an ONU identifier carried in the management and control task, the OMCI subsystem generates an OMCI data packet based on a management and control request, and sends the OMCI data packet via an OLT device to an ONU device, so that coordinated management of an ONU management and control task by the management and control subsystem and the OMCI subsystem is implemented, thereby enabling the ONU management and control task to be executed correctly, efficiently and with a low complexity, and reducing the cost of ONU upgrade, maintenance and version unification.

### BRIEF DESCRIPTION OF THE DRAWINGS

FIG. 1 is a schematic structural diagram of an ONU management system provided by an embodiment of the present disclosure.
FIG. 2 is a schematic flowchart of an ONU management method provided by an embodiment of the present disclosure.
FIG. 3 is a schematic flowchart of sending a first management and control request to an OMCI subsystem based on an ONU identifier provided by an embodiment of the present disclosure.
FIG. 4 is a schematic diagram of task execution under the control of a management and control subsystem provided by an embodiment of the present disclosure.
FIG. 5 is a schematic diagram of a network topology in an xGPON network provided by an embodiment of the present disclosure.
FIG. 6 is a schematic flowchart of an ONU management method provided by an embodiment of the present disclosure.
FIG. 7 is a schematic structural diagram of an ONU management apparatus provided by an embodiment of the present disclosure.
FIG. 8 is a schematic diagram of a composition structure of an ONU management device provided by an embodiment of the present disclosure.
FIG. 9 is a schematic structural diagram of an ONU management system provided by an embodiment of the present disclosure.
FIG. 10 is a schematic diagram of composition of a message of a first type provided by an embodiment of the present disclosure.
FIG. 11 is a schematic diagram of an ONU management method of an ONU management system of the present disclosure.
FIG. 12 shows a schematic flowchart of a scheduling and distribution method when an ONU management and control module receives an ONU management and control request.
FIG. 13 is a schematic flowchart of concurrent execution of management and control requests of different OLT devices provided by an embodiment of the present disclosure.

### DETAILED DESCRIPTION

The present disclosure will be further described in detail below with reference to the accompanying drawings and specific embodiments. It should be understood that the specific embodiments described herein are only used to illustrate the present disclosure, but are not intended to limit the present disclosure.

In the following description, "some embodiments" involved describes a subset of all possible embodiments, but it is to be understood that "some embodiments" may be a same subset or different subsets of all possible embodiments and may be combined with each other without conflict.

If a similar description of "first\second\third" appears in the application documents, the following description is increased. In the following description, the involved terms "first\second\third" are only used to distinguish similar objects, and do not represent a specific order of the objects. It is to be understood that the specific order or sequence of "first\second\third" may be interchangeable if allowed to implement the embodiments of the disclosure described herein in sequences except the illustrated or described ones.

Unless otherwise defined, all technical and scientific terms used herein have the same meaning as commonly understood by those skilled in the art of the present disclosure. The terms used herein is only for the purpose of describing the embodiments of the present disclosure and is not intended to limit the present disclosure.

The embodiments of the present disclosure provide an ONU management method, which is applied to a management and control subsystem in an ONU management system. Before introducing the ONU management method provided by the embodiments of the present disclosure, the ONU management system provided by the embodiment of the present disclosures is introduced firstly.

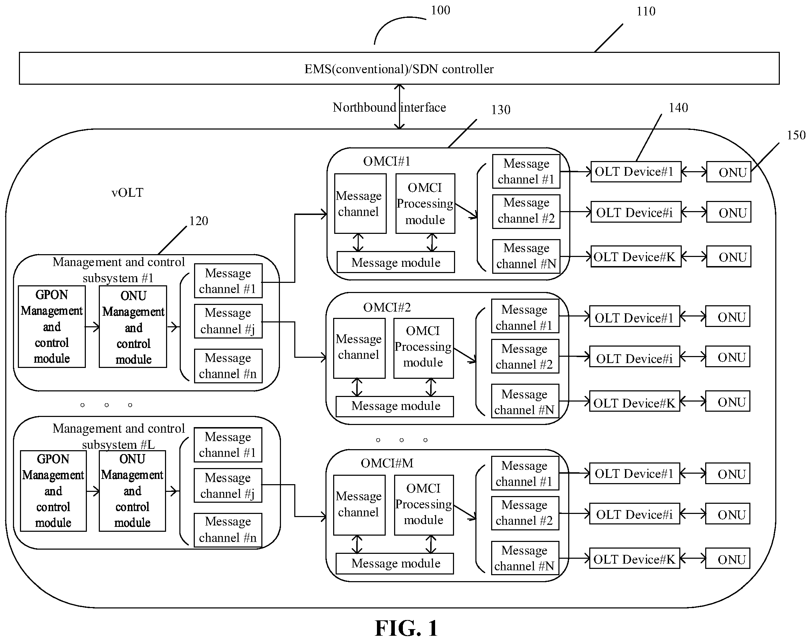

FIG. 1 is a schematic structural diagram of an ONU management system provided by an embodiment of the present disclosure. As shown in FIG. 1, the ONU management system 100 includes: an Element Management System/Software Defined Network (EMS/SDN) control platform 130, one or more management and control subsystems 120, one or more OMCI subsystems 130, one or more OLT devices 140 and one or more ONU devices 150. The EMS/SDN control platform 130 is connected with a plurality of management and control subsystems 120, the management and control subsystem 120 is respectively connected with at least N OMCI subsystems 130 through N message channels, each OMCI subsystem 130 is connected with at least M OLT devices 140 through M message channels, and Q physical interfaces of each OLT device 140 are connected with Q ONU devices 150.

In the embodiments of the present disclosure, the EMS/SDN control platform 110 is responsible for sending a management and control task request of a GPON access network to the management and control subsystem 120 through the interface.

Each management and control subsystem is configured to receive, analyze and process a management request of an XG-Passive Optical Network (XGPON) of the EMS/SDN control platform 110, and extract and send all ONU management and control requests to the corresponding OMCI subsystems 130 through the respective message channels. The management and control subsystem 120 is responsible for scheduling the concurrent execution of the management and control requests and realizing the efficient and accurate execution of the management and control requests.

Each OMCI subsystem 130 is responsible for receiving the management and control request sent from the management and control subsystem 120 and executing one or more management and control tasks to thousands of the ONU devices 150 managed and controlled by the OMCI subsystem 130. The management and control task includes: generation of a configuration sequence of each ONU device 150, configuration library synchronization, etc. All configuration data is sent to the corresponding OLT device 140 through an OMCI data packet. Finally, an execution result of the management and control task of each ONU device 150 is reported to the corresponding management and control subsystem 120.

Each OLT device 140 is a physical device, and the OLT device 140 is responsible for receiving an OMCI message sent from the OMCI subsystem 130 through the message channel and forwarding the OMCI message to the ONU device 150.

Each ONU device 150 is configured to provide services such as data, interactive network television, and voice for a user, and receive the management and control task for execution.

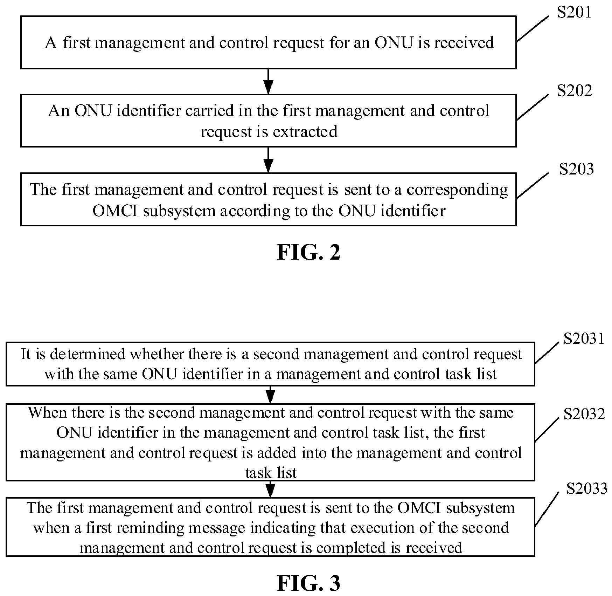

Based on the structure of the above ONU management system, the embodiments of the present disclosure provide an ONU management method, which is applied to a management and control subsystem. The method provided by the embodiments may be implemented by a computer program, and the computer program, when executed, completes the operations of the method provided by the embodiments. In some embodiments, the computer program may manage and control the execution of the processor in the subsystem. FIG. 2 is a schematic flowchart of an ONU management method provided by an embodiment of the present disclosure. As shown in FIG. 2, the method includes the following operations.

At S201, the management and control subsystem receives a first management and control request for an ONU.

In the embodiments of the present disclosure, the first management and control request is a management and control task request for an ONU access network, and the first management and control request is sent by an EMS/SDN control platform.

At S202, the management and control subsystem extracts an ONU identifier carried in the first management and control request.

In the embodiments of the present disclosure, since each ONU has a unique identifier in the GPON network, when the EMS/SDN control platform sends the management and control request for the ONU, the ONU identifier is carried. When the management and control subsystem receives the first management and control request, the ONU identifier carried in the first management and control request may be extracted. In the embodiments of the present disclosure, the identifier includes: an OLT device number corresponding to the ONU, an OLT board card/slot number, an OLT board card port number, and an ONU sequence number.

At S203, the management and control subsystem sends the first management and control request to a corresponding OMCI subsystem based on the ONU identifier, to enable the OMCI subsystem to generate an OMCI data packet based on the first management and control request and send the OMCI data packet to a corresponding OLT device for managing and controlling the ONU based on the OMCI data packet.

In the embodiments of the present disclosure, the management and control subsystem may determine the corresponding OMCI subsystem based on the ONU identifier. Before sending, the management and control subsystem needs to determine whether there is a second management and control task with the same ONU identifier in a task list. If there is no second management and control task with the same ONU identifier, the management and control subsystem directly sends the first management and control task to the OMCI subsystem. If there is the second management and control task with the same ONU identifier, the management and control subsystem may send the first management and control subsystem to the OMCI subsystem only after receiving a message indicating that execution of the second management and control request is completed.

In the embodiments of the present disclosure, after the management and control subsystem sends the first management and control task to the OMCI subsystem, the OMCI subsystem generates the OMCI data packet based on the first management and control request and sends the OMCI data packet to the corresponding OLT device. The OLT device sends the OMCI data packet to the ONU device, and the ONU device performs configuration or update based on the OMCI data packet.

Based on the method provided by the embodiments of the present disclosure, after receiving the first management and control request for the ONU, the management and control subsystem determines the corresponding OMCI subsystem based on the ONU identifier, and after the management and control subsystem sends the first management and control request to the corresponding OMCI subsystem, the OMCI subsystem generates the OMCI data packet based on the first management and control request, and then sends the OMCI data packet to the corresponding OLT device based on the ONU identifier, and the OLT device forwards the OMCI data packet to the corresponding ONU, so that coordinated management of an ONU management and control task by the management and control subsystem and the OMCI subsystem is implemented, thereby enabling the ONU management and control task to be executed correctly, efficiently and with a low complexity, and reducing the cost of ONU upgrade, maintenance and version unification.

In some embodiments, the operation that "the first management and control request is sent to the OMCI subsystem based on the ONU identifier" in S203 may be implemented through the operations at S2031 to S2034. FIG. 3 is a schematic flowchart of sending a first management and control request to an OMCI subsystem based on an ONU identifier provided by an embodiment of the present disclosure. As shown in FIG. 3, the procedure includes the following operations.

At S2031, the management and control subsystem determines whether there is a second management and control request with the same ONU identifier in a management and control task list.

In the embodiments of the present disclosure, a task in the management and control task list is an unfinished task. In the embodiments of the present disclosure, the management and control task list may be one or N. When there is one management and control task list, one management and control task list corresponds to management of the management and control tasks of N message channels. When there are N management and control task lists, each management and control task list corresponds to one message channel. In order to execute the management and control task more correctly and efficiently, N management and control task lists are selected in the embodiments of the present disclosure.

In the embodiments of the present disclosure, when the first management and control request is received, if there is only one task list, it is determined that the ONU identifier carried in the management and control task in the task list is the same as the ONU identifier carried in the first management and control request. If there are N task lists, after the first management and control subsystem extracts the ONU identifier carried in the first management and control request, the message channel corresponding to the ONU identifier is determined firstly, then the management and control task list corresponding to the message channel is selected, and whether there is a second management and control request with the same ONU identifier in the selected management and control task list is determined.

When there is the second management and control request with the same ONU identifier in the management and control task list, it indicates that the management and control task is being executed for the ONU, and then the operation at S2032 is performed. When there is no second management and control request with the same ONU identifier in the management and control task list, it indicates that no management and control task is being executed for the ONU, and then the operation at S2034 is performed.

At S2032, when there is the second management and control request with the same ONU identifier in the management and control task list, the management and control subsystem adds the first management and control request into the management and control task list.

In the embodiments of the present disclosure, since the management and control requests with the same ONU identifier may only be executed serially, when there is the second management and control request with the same ONU identifier in the management and control task list, the first management and control request needs to be added to the management and control task list, so as to be sent to the OMCI subsystem after the management and control task in the management and control task list is completed.

At S2033, the management and control subsystem sends the first management and control request to the OMCI subsystem when a first response message indicating that execution of the second management and control request is completed is received from the OMCI system.

In the embodiments of the present disclosure, the first response message may be a message of execution failure or a message of execution success.

In the embodiments of the present disclosure, after completing the second management and control request, the ONU may send the first response message indicating execution completion to the OMCI subsystem, and the OMCI subsystem sends the first response message to the management and control subsystem. After receiving the first response message, the management and control subsystem sends the first management and control task to the corresponding OMCI subsystem. That is to say, when there are control tasks for the same ONU device, the serial execution of the tasks needs to be ensured. It is to be noted that the first response message may be sent after the management and control tasks corresponding to all second management and control requests in the management and control task list are executed and completed, or may be sent after the management and control task corresponding to one of the second management and control requests in the management and control task list is executed and completed.

At S2034, when there is no second management and control request with the same ONU identifier in the management and control task list, the management and control subsystem sends the first management and control request to the corresponding OMCI subsystem.

In the embodiments of the present disclosure, no matter one management and control task list or N management and control task lists, when there is no management and control request with the same ONU identifier, the first management and control request is directly sent to the OMCI subsystem. That is to say, in the embodiments of the present disclosure, when the ONU identifiers of the management and control tasks are different, the management and control tasks are executed in parallel.

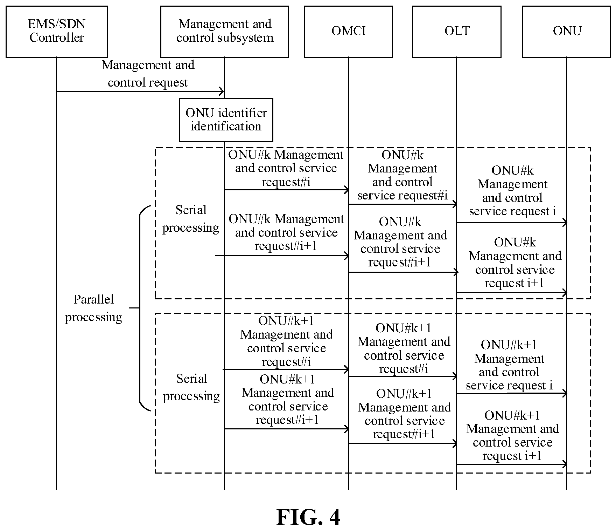

FIG. 4 is a schematic diagram of task execution under the control of a management and control subsystem provided by an embodiment of the present disclosure. As shown in FIG. 4, different management and control service requests (i.e., management and control requests, i.e., the management and control service request #i and the management and control service request #i+1 in FIG. 4) with the ONU identifier #k (i.e., ONU#k in FIG. 4) are serially executed. The management and control requests with the ONU identifier #k (ONU#k in FIG. 4) and the ONU identifier #k+1 (i.e., ONU#k+1 in FIG. 4) are executed in parallel.

Based on the method provided by the embodiments of the present disclosure, when there is the second management and control request with the same ONU identifier as the first management and control request in the management and control task list, the first management and control system is sent only after the message indicating that execution of the second management and control system is completed is received, so that the task is executed by the ONU correctly. When there is no second management and control request with the same ONU identifier in the management and control task list, the first management and control request is sent to the corresponding OMCI subsystem. Thus, the management and control tasks are executed in parallel, and the efficient execution of ONU management and control is implemented.

In some embodiments, before the operation at S201, the method further includes the following operations.

At S200, the management and control subsystem establishes a network topology between the management and control subsystem per se and the OMCI subsystem, the OLT device and the ONU.

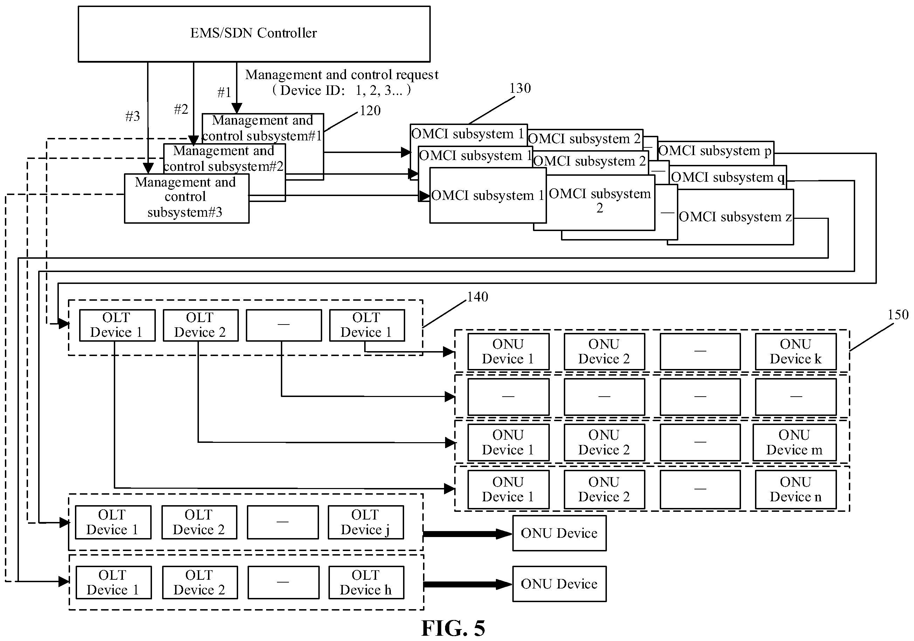

FIG. 5 is a schematic diagram of a network topology in an xGPON network provided by an embodiment of the present disclosure. As shown in FIG. 5, each management and control subsystem 120 is connected with at least N OMCI subsystems 130 through N message channels, each OMCI subsystem 130 is connected with at least M OLT devices 140 through M message channels, Q physical interfaces of each OLT device 140 are connected with Q ONUs 150, each management and control subsystem 120 is directly connected with M OLT devices 140 through M message channels, and N, M, and Q are integers greater than or equal to 1.

In the embodiments of the present disclosure, the numbers of the management and control subsystems 120, the OMCI subsystems 130, the OLT devices 140 and the ONU devices 150 all have a certain relationship. When the number of the ONU devices 150 is changed, the number of the OLT devices 140 may be changed, the number of the OMCI subsystems 130 may be changed, and the number of the management and control subsystems 120 may also be changed. Therefore, when the network topology is established, the network topology is determined based on the order of the ONU device 150, the OLT device 140, the OMCI subsystem 130, and the management and control subsystem 120.

In the embodiments of the present disclosure, the OLT device 140 is connected with the ONU devices 150. Assuming that an xGPON access network includes N OLT devices 140 (cases), each OLT device 140 includes K OLT board cards/line cards/slots, each OLT board card is provided with J physical ports, and each physical port is connected with L ONU devices. The sequence number of the ONU devices may be repeated from 0 to L (generally, L is 32, or other integer values). That is to say, Q is a product of L*J*K*N, so that one OLT device 140 may be connected with Q ONU devices 150.

The OLT device 140 is connected with the OMCI subsystem 130. Based on the principles such as system implementation and efficiency, all OLT devices 140 are divided into blocks, each block contains one or more OLT devices 140, and each OLT device 140 block is connected with an instance of the OMCI subsystem 130 through the message channel, so that a distributed xGPON access network includes one or more OMCI system instances 130, and each OMCI subsystem 130 needs to establish different message channels with one or more different OLT devices 140. When there are M OLT devices 140, each OMCI subsystem 130 is connected with one OLT device 140 through the corresponding message channel. When the number of the OLT devices 140 is greater than M, one OMCI subsystem 130 may be connected with the plurality of OLT devices 140 through the corresponding message channels.

The OMCI subsystem 130 is connected with the management and control subsystem 120. The OMCI subsystems 130 are divided into blocks, and each OMCI subsystem 130 block is connected with an management and control subsystem 120 instance through the message channel, so that the distributed xGPON access network includes one or more management and control subsystems 120, and one management and control subsystem 120 needs to establish different message channels with one or more different vOMCI subsystems 130. When there are N OMCI subsystems 130, each management and control subsystem 120 is connected with one OMCI subsystem 130 through the corresponding message channel. When the number of OMCI subsystems 130 is greater than N, one management and control subsystem 120 may be connected with the plurality of OMCI subsystems 130 through the corresponding message channels.

The management and control subsystem 120 establishes an association with the OLT device 140 connected to the corresponding OMCI subsystem 130, and each management and control subsystem 120 needs to establish different message channels with one or more different OLT devices 140.

Exemplarily, if the distributed xGPON supports access of 1,024,000 users, 10 board cards may be inserted into one OLT device, and each board card is provided with 16 xGPON ports, each port may be connected with 32 ONU devices, then 200 OLT devices are required. If each OMCI subsystem instance is responsible for the ONU device connected with two OLT devices, 100 OMCI subsystems are required. If each management and control subsystem instance is responsible for 25 OMCI subsystems, four management and control subsystem are required, and the four management and control subsystem instances establish network connections with eight OLT devices respectively associated with the corresponding OMCI subsystems.

Based on the above-mentioned network topology, the operation that "the first management and control request is sent to the corresponding OMCI subsystem based on the ONU identifier" in S203, S2032 and S2034 may be implemented by the following operations.

At S203A, the management and control subsystem selects a corresponding message channel based on the ONU identifier.

In the embodiments of the present disclosure, when the network topology is established, the management and control subsystem may select the corresponding message channel based on the ONU identifier.

At S203B, the management and control subsystem sends the first management and control request to the corresponding OMCI subsystem through the corresponding message channel.

In the embodiments of the present disclosure, after selecting the corresponding message channel, the management and control subsystem sends the first management and control request to the corresponding OMCI subsystem through the corresponding message channel.

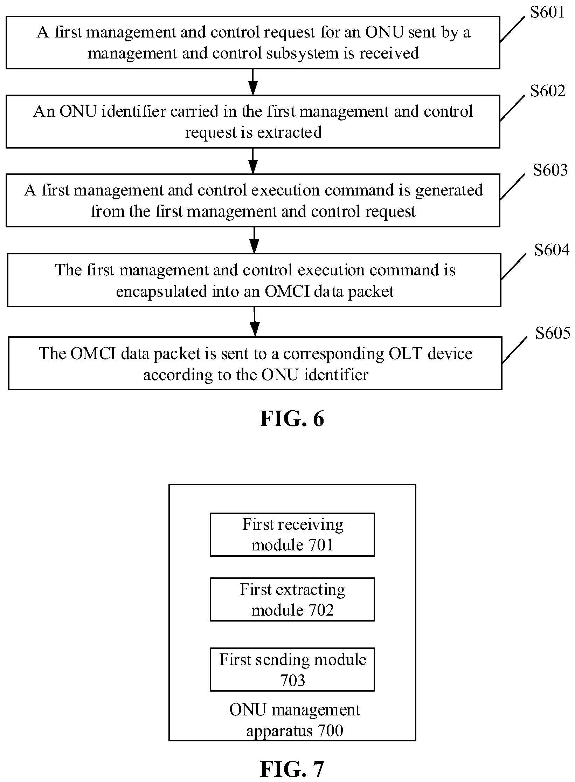

Based on the structure of the above-mentioned ONU management and control system, the embodiments of the present disclosure provide an ONU management method, which is applied to an OMCI subsystem. The method provided by the embodiments may be implemented by a computer program, and the computer program, when executed, completes the operations of the method provided by the embodiments. In some embodiments, the computer program may be executed by the processor in the OMCI subsystem. FIG. 6 is a schematic flowchart of an ONU management method provided by an embodiment of the present disclosure. As shown in FIG. 6, the method includes the following operations.

At S601, the OMCI subsystem receives a first management and control request for an ONU sent by a management and control subsystem.

In the embodiments of the present disclosure, when the management and control subsystem sends the first management and control request for the ONU, the corresponding message channel is selected based on the ONU identifier. When the OMCI subsystem receives the first management and control request, it may be determined that the first management and control request is configured to enable the ONU under the OLT device controlled by the OMCI subsystem to execute the management and control task.

At S602, the OMCI subsystem extracts an ONU identifier carried in the first management and control request.

At S603, the OMCI subsystem generates a first management and control execution command from the first management and control request based on the first management and control request.

In the embodiments of the present disclosure, the first management and control execution command is used to enable the ONU device to execute the corresponding management and control task.

At S604, the OMCI subsystem encapsulates the first management and control execution command into an OMCI data packet.

At S605, the OMCI subsystem sends the OMCI data packet to a corresponding OLT device based on the ONU identifier, to enable the OLT device to manage and control the ONU based on the OMCI data packet.

In the embodiments of the present disclosure, when the OMCI subsystem sends the OMCI data packet to the OLT device based on the extracted ONU identifier, the OLT device forwards the OMCI data packet to the ONU, so that the ONU executes the management and control execution command after receiving the management and control execution command, thereby realizing the management and control of the ONU.

In the method provided by the embodiments of the present disclosure, after receiving the management and control request, the management and control subsystem determines whether to execute the management and control task serially or in parallel based on the ONU identifier carried in the management and control request, so that when receiving the management and control request sent by the management and control subsystem, the OMCI does not need to consider the logical sequence or relationship between various configuration tasks, and only executes various control tasks. Furthermore, by decoupling the OMCI subsystem with the OLT device, the problem of interconnection between the ONU and OLT devices is reduced, so that the ONU device is upgraded independently and quickly.

In some embodiments, the method further includes the following operations.

At S606, the OMCI subsystem receives from the OLT a second response message indicating that execution of the first management and control request is completed.

In the embodiments of the present disclosure, the second response message may be a message of execution failure or a message of execution success.

At S607, the OMCI subsystem sends the second response message to the management and control subsystem, so that the management and control subsystem determines that the first management and control request is executed and completed.

In the embodiments of the present disclosure, when receiving the second response message, the OMCI subsystem sends the second response message to the management and control subsystem, so that the management and control subsystem determines that execution of the first management and control request is completed. Therefore, the management and control subsystem executes the next task for the ONU.

In some embodiments, the operation that "the OMCI subsystem sends the second response message to the management and control subsystem" in S607 may be implemented by the following operations.

At S6071, the OMCI subsystem determines whether the ONU identifier carried in the second response message is the same as the ONU identifier carried in the first management and control request.

At S6072, when the carried ONU identifiers are the same, the OMCI subsystem sends the second response message to the management and control subsystem through a message channel corresponding to the first management and control request.

In the embodiments of the present disclosure, when the ONU identifier is the same as the ONU identifier carried in the first management and control request, the message channel corresponding to the first management and control request is determined, and then the second response message is sent to the management and control subsystem through the message channel corresponding to the first management and control request.

Based on the above-mentioned embodiments, the embodiments of the present disclosure provide an ONU management apparatus. Modules included in the apparatus and units included in the modules may be implemented by a processor in a computer device, and of course, may also be implemented through one or more logic circuits. In the process of implementation, the processor may be a Central Processing Unit (CPU), a Microprocessor Unit (MPU), and a Digital Signal Processing (DSP) or a Field Programmable Gate Array (FPGA), etc.

The embodiments of the present disclosure provide an ONU management apparatus. FIG. 7 is a schematic structural diagram of an ONU management apparatus provided by an embodiment of the present disclosure. As shown in FIG. 7, the ONU management apparatus 700 includes a first receiving module 701, a first extracting module 702, and a first sending module 703.

The first receiving module 701 is configured to receive a first management and control request for an ONU.

The first extracting module 702 is configured to extract an ONU identifier carried in the first management and control request.

The first sending module 703 is configured to send the first management and control request to a corresponding OMCI subsystem based on the ONU identifier, to enable the OMCI subsystem to generate an OMCI data packet based on the first management and control request and send the OMCI data packet to a corresponding OLT device for managing and controlling the ONU based on the OMCI data packet.

In some embodiments, the first sending module 703 includes a first determining unit, an execution unit, and a first sending unit.

The first determining unit is configured to determine whether there is a second management and control request with the same ONU identifier in a management and control task list. The task in the management and control task list is an unfinished task.

The execution unit is configured to add the first management and control request to the management and control task list when there is the second management and control request with the same ONU identifier in the management and control task list.

The first sending unit is configured to send the first management and control request to the OMCI subsystem when a first response message indicating that execution of the second management and control request is completed is received from the OMCI subsystem.

In some embodiments, the first sending module 703 further includes a second sending unit.

The second sending unit is configured to send the first management and control request to the corresponding OMCI subsystem when there is no second management and control request with the same ONU identifier in the management and control task list.

In some embodiments, the ONU management and control apparatus 700 further includes an establishing module.

The establishing module is configured to establish a network topology between the management and control subsystem and the OMCI subsystem, the OLT device and the ONU. The ONU management and control subsystem is respectively connected with at least N OMCI subsystems through N message channels, each OMCI subsystem is connected with at least M OLT devices through M message channels, Q physical interfaces of each OLT device are connected with Q ONUs, each management and control subsystem is directly connected with M OLT devices through M message channels, and N, M, and Q are integers greater than or equal to 1.

In some embodiments, the first sending module 703 further includes a selection unit and a third sending unit.

The selection unit is configured to select a corresponding message channel based on the ONU identifier.

The third sending unit is configured to send the first management and control request to the corresponding OMCI subsystem through the corresponding message channel.

The embodiments of the present disclosure further provide an ONU control apparatus, which includes: a second receiving module, a second extracting module, an OMCI processing module, and a second sending module.

The second receiving module is configured to receive a first management and control request for an ONU sent by a management and control subsystem.

The second extracting module is configured to extract an ONU identifier carried in the first management and control request.

The OMCI processing module is configured to generate a first management and control execution command from the first management and control request based on the first management and control request, and encapsulate the first management and control execution command into an OMCI data packet.

The second sending module is configured to send the OMCI data packet to a corresponding OLT device based on the ONU identifier, to enable the OLT device to manage and control the ONU based on the OMCI data packet.

In some embodiments, the ONU management and control apparatus further includes a third receiving module and a third sending module.

The third receiving module is configured to receive from the OLT device a second response message indicating that execution of the first management and control request is completed.

The third sending module is configured to send the second response message to the management and control subsystem, to enable the management and control subsystem to determine that execution of the first management and control request is completed.

In some embodiments, the third sending module includes a first determining unit and a fourth sending unit.

The first determining unit is configured to determine whether the ONU identifier carried in the second response message is the same as the ONU identifier carried in the first management and control request.

The fourth sending unit is configured to send the second response message to the management and control subsystem through a message channel corresponding to the first management and control request when the carried ONU identifiers are the same.

The descriptions of the above apparatus embodiments are similar to that of the above method embodiments, and have the beneficial effects similar to that of the method embodiments. For technical details not disclosed in the apparatus embodiments of the present disclosure, reference is made to the descriptions of the method embodiments of the present disclosure for understanding.

It is to be noted that, in the embodiments of the present disclosure, the ONU management method may also be stored in a computer-readable storage medium if being implemented in the form of a software functional module and sold or used as a independent product. Based on such an understanding, the technical solutions of the embodiments of the present disclosure substantially or parts making contributions to the conventional art may be embodied in form of software product, and the computer software product is stored in a storage medium, including a plurality of instructions configured to enable a computer device (which may be a personal computer, a server, a network device or the like) to execute all or part of the operations of the method in each embodiment of the present disclosure. The foregoing storage medium includes: various media capable of storing program codes such as a USB disk, a mobile hard disk drive, a Read Only Memory (ROM), a magnetic disk, or an optical disk. Thus, the embodiments of the present disclosure are not limited to any particular combination of hardware and software.

Correspondingly, the embodiments of the present disclosure provide a computer-readable storage medium having a computer program stored thereon. The computer program, when executed by a processor, implements the operations of the ONU management method provided in the above embodiments of the present disclosure.

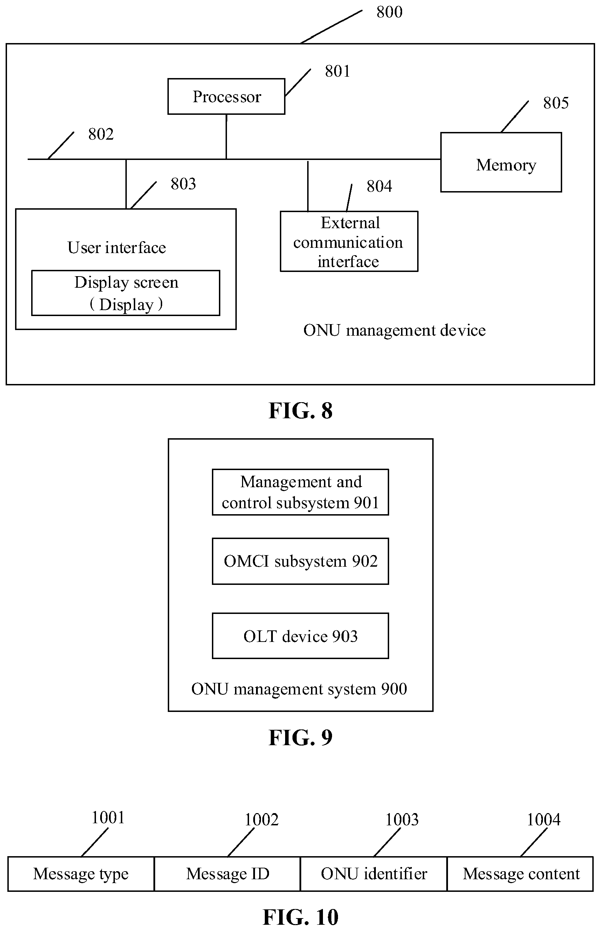

The embodiments of the present disclosure provide an ONU management device. FIG. 8 is a schematic diagram of a composition structure of an ONU management device provided by an embodiment of the present disclosure. As shown in FIG. 8, the ONU management device 800 includes a processor 801, at least one communication bus 802, a user interface 803, at least one external communication interface 804 and a memory 805. The communication bus 802 is configured to implement connection communication between these components. The user interface 803 may include a display screen, and the external communication interface 804 may include a standard wired interface and wireless interface. The processor 801 is configured to execute the program of the ONU management method stored in the memory, to implement the operations of the ONU management method provided in the above embodiments.

The descriptions of the above embodiments of the ONU management device and the storage medium are similar to that of the above method embodiments, and have the beneficial effects similar to that of the method embodiments. For technical details not disclosed in the embodiments of the ONU management device and the storage medium of the present disclosure, reference is made to the descriptions of the method embodiments of the present disclosure for understanding.

The embodiments of the present disclosure further provide an ONU management system. FIG. 9 is a schematic structural diagram of an ONU management system provided by an embodiment of the present disclosure. As shown in FIG. 9, the system includes: a management and control subsystem 901, an OMCI subsystem 902, and an OLT device 903.

The management and control subsystem 901 is configured to receive a first management and control request of an ONU, extract an ONU identifier carried in the first management and control request, and send the first management and control request to a corresponding OMCI subsystem based on the ONU identifier.

The OMCI subsystem 902 is configured to generate an OMCI data packet based on the first management and control request and send the OMCI data packet to the corresponding OLT device based on the ONU identifier carried in the first management and control request.

The OLT device 903 is configured to send the OMCI data packet to the ONU, to enable the ONU to execute the management and control request based on the OMCI data packet.

In some embodiments, the management and control subsystem 901 is also configured to determine whether there is a second management and control request with the same ONU identifier in a management and control task list, the task in the task list being an unfinished task, and add the first management and control request into the management and control task list when there is the second management and control request with the same ONU identifier in the management and control task list.

The OMCI subsystem 902 is also configured to send, when a first response message indicating that execution of the second management and control request is completed is received, the first response message to the management and control subsystem 901.

The management and control subsystem 901 is also configured to receive the first response message and send the first management and control request to the OMCI subsystem 902.

In some embodiments, the management and control subsystem 901 is also configured to send the first management and control request to the corresponding OMCI subsystem 902 when there is no second management and control request with the same ONU identifier in the management and control task list.

In some embodiments, the OLT device 903 is also configured to receive from the ONU a second response message indicating that execution of the first management and control request is completed, and send the second response message to the OMCI subsystem 902.

The OMCI subsystem 902 is also configured to send the second response message to the management and control subsystem 901.

In some embodiments, the OMCI subsystem 902 includes: a message channel module, a message-oriented middleware module and an OMCI processing module. The message channel module includes a message channel corresponding to the first management and control request.

The message channel module is configured to receive the first management and control request sent by the management and control subsystem 901.

The message-oriented middleware module is configured to receive the first management and control request from the message channel corresponding to the first management and control request.

In the embodiments of the present disclosure, in order to implement concurrent execution of different ONU management and control tasks, the OMCI subsystem 902 is configured to schedule and execute different ONU management and control request tasks through the message-oriented middleware. Since message processing and execution are asynchronous, the synchronous control effect needs to be achieved, i.e., ensuring that the same ONU management and control tasks are executed sequentially. After receiving an ONU management and control request, the message channel module of the OMCI subsystem 902 sends the ONU management and control request to the OMCI processing module through the message-oriented middleware.

The OMCI processing module is configured to obtain the first management and control request from the message-oriented middleware, generate the OMCI data packet based on the first management and control request, and send the OMCI data packet to the corresponding OLT device based on the ONU identifier carried in the first management and control request.

In some embodiments, the OMCI processing module is also configured to subscribe a message of a first type from the message-oriented middleware.

In the embodiments of the present disclosure, the OMCI processing module subscribes the message of the first type from the message-oriented middleware. The message of the first type is a request message. The request message is obtained by the message-oriented middleware from the message channel module.

In the embodiments of the present disclosure, the message of the first type includes a message type, a message ID, an ONU identifier and message content. FIG. 10 is a schematic diagram of composition of a message of a first type provided by an embodiment of the present disclosure.

As shown in FIG. 10, the message type 1001 includes: a service request, service completion, event reporting, a warning light, etc. The message type is set to be a request type.

The message ID 1002 includes: a unique ID of one message of the ONU device. The IDs in a service request message and a service completion message are the same.

The ONU identifier 1003 is provided.

For the service request message, the message content 1004 includes a service request name and one or more parameters. For the service completion message, the message content 1004 includes a service request execution result, such as execution success, execution failure or other information. When the service completion message is received, the message-oriented middleware immediately publishes the service completion message to the message channel and publishes a request message to the OMCI processing module simultaneously.

After receiving the message of the first type, the OMCI subsystem records the ID and the ONU identifier of the message, executes the corresponding management and control task sequence based on the message content, and obtains a processing result returned by the ONU from the OLT device. The OMCI subsystem publishes the service completion message through the message-oriented middleware based on the returned result and the message ID and the ONU identifier of the corresponding request message. The message type is service completion, and the message ID and the ONU identifier are consistent with the ID and the ONU identifier in the corresponding service request message.

The message channel module is also configured to subscribe a message of a second type from the message-oriented middleware.

In the embodiments of the present disclosure, the message of the second type is a response message. The response message is obtained by the message-oriented middleware through the OMCI management and control module. In the embodiments of the present disclosure, the message type of the message of the second type is a service completion message. When receiving the message of the second type, the message-oriented middleware immediately sends the message of the second type to the message channel module. When receiving the message of the second type, the message channel module matches the message ID and the ONU identifier, extracts the execution result, and returns the execution result to the management and control subsystem. In the embodiments of the present disclosure, when the ONU identifiers are the same, the response message is sent to the management and control subsystem through the message channel corresponding to the first management and control request.

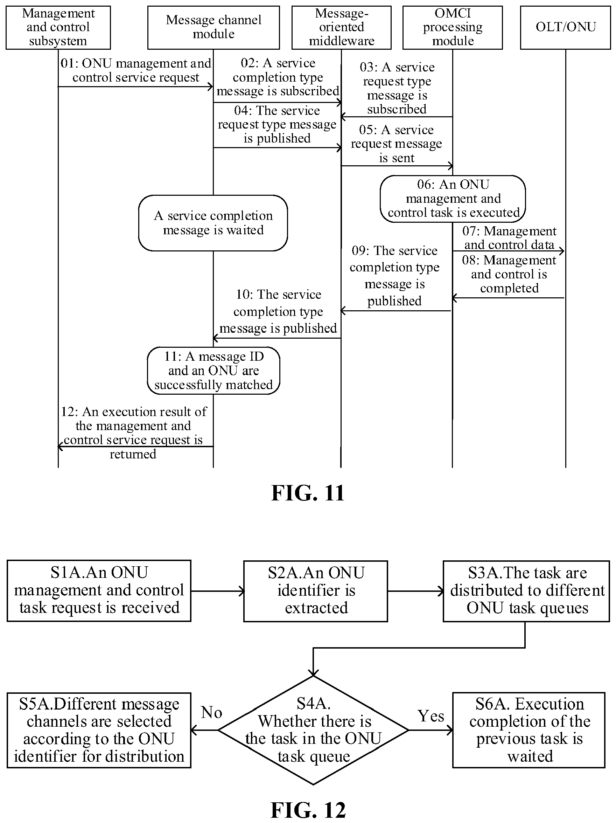

The embodiments of the present disclosure provide an ONU management method of an ONU management system. FIG. 11 is a schematic diagram of an ONU management method of an ONU management system provided by an embodiment of the present disclosure. It is to be noted that in FIG. 11, 01. indicates S1101, 02. indicates S1102, and so on. As shown in FIG. 11, the method includes the following operations.

At S1101, a management and control subsystem sends an ONU management and control service request to an OMCI subsystem.

In the embodiments of the present disclosure, the ONU management and control service request corresponds to the first management and control request in other embodiments.

At S1102, a message channel module subscribes a completion type message of a message-oriented middleware.

In the embodiments of the present disclosure, the completion type message corresponds to the message of the second type in other embodiments.

At S1103, an OMCI processing module subscribes a service request type message of the message-oriented middleware.

In the embodiments of the present disclosure, the service request type message corresponds to the message of the first type in other embodiments.

In the embodiments of the present disclosure, the operations at S1102 and S1103 may be before the operation at S1101 or after the operation at S1101.

At S1104, the message channel module publishes the service request type message to the message-oriented middleware.

At S1105, the message-oriented middleware sends a service request message to the OMCI processing module.

At S1106, the OMCI processing module manages and controls the task execution based on the service request message.

In the embodiments of the present disclosure, the operation that the OMCI processing module manages and controls the task execution based on the service request message corresponds to the operation that the OMCI processing module processes the service request message to generate the OMCI management and control data packet in other embodiments.

At S1107, the OMCI processing module sends the management and control data packet to an OLT device.

In the embodiments of the present disclosure, the management and control data packet corresponds to the OMCI management and control data packet in other embodiments.

In the embodiments of the present disclosure, when the OLT device receives the management and control data packet, the OLT device sends the management and control data packet to an ONU device, so that the ONU device executes the task corresponding to the OMCI data packet. After execution of the task is completed, the ONU device sends a management and control completion message to the OLT.

At S1108, the OMCI processing module receives the management and control completion message returned by the OLT device.

In the embodiments of the present disclosure, the management and control completion message corresponds to the message of the second type in other embodiments.

At S1109, the OMCI processing module sends the service completion type message to the message-oriented middleware.

At S1110, the message-oriented middleware publishes the service completion type message to the message channel module.

In the embodiments of the present disclosure, when the message-oriented middleware receives the service completion type message, the message-oriented middleware immediately sends the service completion type message to the message channel module since the message channel module subscribes the service completion type message of the message-oriented middleware..

At S1111, the message channel module successfully matches a message ID and an ONU identifier.

At S1112, the message channel module sends an execution result of the management and control service request to the management and control subsystem.

In the embodiments of the present disclosure, the execution result of the management and control service request is equivalent to the response message indicating the completion of task execution in other embodiments.

In the embodiments of the present disclosure, the message-oriented middleware schedules and executes different ONU management and control request tasks, achieves a synchronous control effect, and also ensures that the same ONU management and control requests are executed sequentially.

The embodiments of the present disclosure further provide a method for managing and controlling an ONU in a distributed xGPON access network (which is equivalent to an ONU management method) and system. Through the ONU management and control method and system, the ONU management and control tasks (ONU management and control requests) may be executed correctly, efficiently and with a low complexity. The correct execution of the ONU management and control requests means that the management and control requests are executed sequentially. The efficient execution requires the ONU management and control requests to be executed in parallel as much as possible to improve the efficiency of the ONU management and control. The low-complexity execution of a vOMCI subsystem requires the subsystem to be as simple as possible without considering the logical sequence or relationship between the configuration tasks, and only executing various management or control operations.

Reference is continued to be made to FIG. 1, as shown in FIG. 1, the ONU management and control system includes: an EMS/SDN control platform 110, one or more management and control subsystems 120, one or more vOMCI subsystems 130 (OMCI subsystem), one or more OLT devices 140 and one or more ONU devices 150.

The EMS/SDN control platform 110 is configured to send a management and control task request of an xGPON access network to the management and control subsystem 120 through a northbound interface.

Each management and control subsystem 120 is configured to receive, analyze and process xGPON management requests from an upper management system platform, such as EMS, SDN controllers and the like. The management and control subsystem 120 mainly includes a GPON management and control module, an ONU management and control module, and a message channel module (gPRC, etc.)

The GPON management and control module is configured to extract and send all ONU management and control processing requests to the ONU management and control module.

The ONU management and control module is configured to receive the ONU management and control request and then send the ONU management and control request to the corresponding vOMCI subsystem 130 through the message channel module.

The ONU management and control module is configured to schedule concurrent execution of the ONU management and control tasks and implement the efficient and accurate execution of the ONU management and control tasks.

Each vOMCI subsystem 130 is configured to receive the ONU management and control request sent from the management and control subsystem 120, and execute the management and control task, such as generation of a configuration sequence of the ONU devices, configuration library synchronization or the like, to thousands of objects of the ONU 150 managed and controlled by the vOMCI subsystem 130. All configuration data is sent to the ONU corresponding to the OLT device 140 through the OMCI data packet. Finally, the execution result of the management and control task from the ONU device 150 is reported to the management and control subsystem 120.

Each OLT device 140 is an OLT physical device in an SDN-OLT reconstruction device. Compared with a conventional OLT device, the OLT device is responsible for receiving the OMCI message sent from the vOMCI module through the message channel and forwarding the OMCI message to the ONU device.

Each ONU device 150 is basically the same as a conventional ONU device, and is configured to provide services such as data, interactive network television, and voice for a user.

The embodiments of the present disclosure first provide a method for establishing a connection topology of a distributed ONU management system. In actual deployment, FIG. 5 is a schematic structural diagram of a connection topology of an ONU management system provided by an embodiment of the present disclosure. As shown in FIG. 5, the connection topology of the distributed xGPON access network may include: a plurality of management and control subsystems 120, vOMCI subsystems 130, OLT devices 140 and ONU devices 150. These subsystems or devices implement the connection topology through the following operations.

At S1, an OLT device 140 establishes a connection with an ONU device 150.

Assuming that the xGPON access network includes N OLT devices 150 (cases), each OLT device includes K OLT board cards/line cards/slots, each OLT board card is provided with J physical ports, and each physical port is connected with L ONU devices 150. The sequence number of the ONU devices may be repeated from 0 to L (generally, L is 32, or other integer values). Therefore, the total number of the ONU devices 150 is: ONUn=L*J*K*N.

At S2, the OLT device 140 is allocated and connected with the vOMCI subsystem 150.

Based on the principles such as system implementation and efficiency, in the embodiments of the present disclosure, the whole OLT devices 140 are divided into blocks, each block contains one or more OLT devices 150, and each OLT device 140 block is connected with an vOMCI subsystem 150 instance through the message channel, so that the distributed xGPON access network system includes one or more vOMCI system instances 130 (i.e., the OMCI subsystems), and each vOMCI subsystem 130 needs to establish different message channels with one or more different OLT devices 140.

At S3, the vOMCI subsystem 130 establishes a connection with the management and control subsystem 120.

The vOMCI subsystems 130 are divided into blocks, and each vOMCI subsystem 130 block is connected with an management and control subsystem 120 instance through the message channel. Therefore, the distributed xGPON access network includes one or more management and control subsystem 120 instances, and each management and control subsystem 120 needs to establish different message channels with one or more different vOMCI subsystems 130.

At S4, the management and control subsystem establishes a connection with the OLT device.

The management and control subsystem 120 establishes an association with the OLT device 140 associated with the corresponding vOMCI subsystem 130 at S3, and each management and control subsystem 120 needs to establish different message channels with one or more different OLT devices 140.

Based on the method, if the distributed XGPON supports access of 1,024,000 users, (K=)10 board cards may be inserted into one OLT device, each board card is provided with (J=)16 XGPON ports, each port may be connected with (L=)32 ONU devices, then 200 OLT devices are required. If each vOMCI subsystem instance is responsible for the ONU device connected with two OLT devices, 100 vOMCI instances are required. If each management and control subsystem instance is responsible for 25 vOMCI instances, four management and control subsystem instances are required, and the four management and control subsystem instances establish network connections with eight OLT devices respectively associated with the corresponding vOMCI instances.

Based on the above-mentioned network connection topology of the distributed GPON, the embodiments of the present disclosure provide an ONU management and control method. Scheduling, distribution and execution of the ONU management and control tasks are jointly implemented through the ONU management and control module in the management and control subsystem and the vOMCI module in the vOMCI subsystem.

A method for scheduling and distributing an ONU management and control task in the management and control subsystem may be implemented in the following mode.

The ONU management and control module (i.e., the ONU management and control module below) performs scheduling and distribution based on an ONU identifier in the management and control task request based on different principles.

In the embodiments of the present disclosure, each ONU has a global unique identifier, and the OLT device number corresponding to the ONU, the OLT board card/slot number, the OLT board card port number, and the ONU sequence number may be extracted or calculated from the identifier.

In the embodiments of the present disclosure, each ONU management and control task request message includes an ONU identifier. After the ONU management and control module identifies the ONU identifier included in the ONU management and control task request message, a scheduling policy is as follows.

The management and control task requests with different ONU identifiers may be executed in parallel.

The management and control tasks with the same ONU identifier need to be executed serially. For the same ONU, the next management and control task request may be executed only after the previous management and control task request is completed. Therefore, for the same ONU management and control task request, only after the management and control subsystem sends the ONU management and control task request to the vOMCI subsystem through the message channel and receives the result returned by the vOMCI subsystem, the management and control subsystem may send the next task request to the vOMCI through the message channel only

A distribution strategy is as follows.

Based on the connection topology of the distributed XGPON access network, the ONU management and control module selects the corresponding message channel based on the ONU identifier, and distributes the ONU management and control task to the corresponding vOMCI subsystem.

FIG. 12 shows a schematic flowchart of a scheduling and distribution method when an ONU management and control module receives an ONU management and control request. As shown in FIG. 12, the procedure includes the following operations.

At S1A, the ONU management and control module receives the ONU management and control request.

The ONU management and control request corresponds to the first management and control request in other embodiments.

At S2A, the ONU management and control module extracts the ONU identifier in the ONU management and control request.

At S3A, the ONU management and control module distributes the task to the corresponding ONU task queue based on the ONU identifier.

The ONU task queue corresponds to the management and control task list in other embodiments.

At S4A, the ONU management and control module determines whether there is an unfinished task in the ONU task queue.

In the embodiments of the present disclosure, if there is no unfinished task, the operation at S5A is executed, that is, the task is sent to the corresponding OMCI subsystem based on the ONU identifier. If there is an unfinished task, the operation at S6A is executed.

At S5A, the ONU management and control module sends the task to the corresponding OMCI subsystem based on the ONU identifier.

At S6A, the execution completion of the unfinished task is waited.

In the embodiments of the present disclosure, after the task is executed and completed, the operation at S5A is executed.

Synchronous/blocking call execution and control of the tasks managed and controlled by the vOMCI subsystem may be implemented in the following mode.

In the embodiments of the present disclosure, the vOMCI subsystem includes: a message channel module, a message processing module (message-oriented middleware (Redis, etc.)) and an OMCI processing module. Reference is continued to be made to FIG. 4, after receiving an ONU management and control request from the management and control subsystem through the message channel, the vOMCI subsystem forwards the ONU management and control request to the OMCI processing module through the interface provided by the message processing module. After receiving the ONU management and control request, the OMCI processing module performs related processing, generates an ONU management and control execution command sequence, encapsulates the ONU management and control execution command sequence into the OMCI data packet, and sends the OMCI data packet to the OLT device through the message channel between the vOMCI subsystem instance and the OLT device. Then, the OLT device forwards the OMCI data packet to the ONU, the ONU receives the OMCI data packet, executes the corresponding action based on the content of the data packet, and returns the execution result to the OMCI processing module. The OMCI processing module returns the execution result to the management and control subsystem. After receiving the result, the management and control subsystem continues to cyclically execute the next ONU management and control task request.

The embodiments of the present disclosure further provide a method for synchronous call control (management) of an ONU management and control service request. The method is a synchronous call control method of the ONU management and control service request based on a message-oriented middleware. The implementation mode is as follows.

Different from sequential nested call and result return between conventional functions, in order to implement the concurrent execution of different ONU management and control tasks, a vOMCI subsystem is configured to schedule and execute different ONU management and control request tasks through a message-oriented middleware. Since message processing and execution are asynchronous, a method needs to be used to achieve a synchronous control effect, i.e., ensuring that the same ONU management and control tasks are executed sequentially. In the embodiments of the present disclosure, the vOMCI subsystem includes: a message channel module, a message processing module (message-oriented middleware (Redis, etc.)) and an OMCI processing module. After the message channel module of the vOMCI subsystem receives an ONU management and control processing service request, the ONU management and control request is sent to the OMCI processing module via the message-oriented middleware. The message includes a message type, a message ID, an ONU identifier, a message content, etc.

Reference is continued to be made to FIG. 10, the message type 1001 includes: a service request, service completion, event reporting, a warning light, etc. The message type is set to be a request type.

The message ID 1002 includes: a unique ID corresponding to one message of the ONU device. The IDs in a service request message and a service completion message are the same.

The ONU identifier 1003 is provided.

For the service request message, the message content 1004 includes a service request name and one or more parameters. For the service completion message, the message content 1004 includes a service request execution result, such as execution success, execution failure or other information.

When the message-oriented middleware receives the service completion message, the message channel module immediately subscribes the service completion message to the message-oriented middleware, and meanwhile, the message-oriented middleware publishes the service request message to the OMCI processing module.

The OMCI processing module subscribes all service request message types. After receiving the service request message, the OMCI subsystem records the message ID and the ONU identifier, executes the corresponding management and control request sequence based on the message content, obtains a processing result returned from the ONU, and publishes the service completion message through the message-oriented middleware based on the returned result and the message ID and the ONU identifier of the corresponding request message. The message type is service completion, and the message ID and the ONU identifier are consistent with the ID and the ONU identifier in the corresponding service request message.

After receiving the service completion message, the above-mentioned ONU management and control processing service or message channel module matches the message ID and the ONU identifier, extracts the execution result, and returns the execution result to the management and control subsystem.

FIG. 11 is a schematic flowchart of a synchronous call control method of an ONU management and control service request based on a message-oriented middleware, which is a refined implementation mode of a serial processing procedure in FIG. 4.

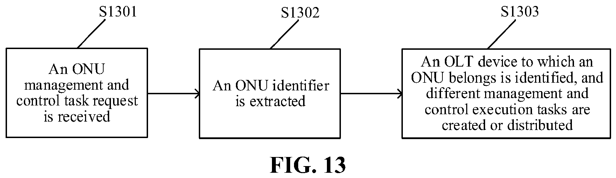

In the embodiments of the present disclosure, the ONU management and control requests on different OLT devices are executed concurrently. FIG. 13 is a schematic flowchart of concurrent execution of management and control requests of different OLT devices provided by an embodiment of the present disclosure. As shown in FIG. 13, the procedure includes the following operations.

At S1301, an OMCI processing module receives a management and control request from a message module.

At S1302, the OMCI processing module extracts an ONU identifier in the message.

At S1303, the OMCI processing module extracts or calculates the OLT device number based on the ONU identifier, and creates different tasks (for example, threads in a linux system) based on different OLT device numbers for concurrent execution .

Based on the method, device and system provided by the embodiments of the present disclosure, decoupling of the ONU and the OLT device may be realized, and the function such as independent and rapid upgrade of the ONU device and the like may be realized. In the embodiments of the present disclosure, a unified and standard OMCI software plug-in or public service platform is further provided, which not only reduces the problem of interconnection between the OLT and the ONU device, but also reduces the complexity of the management and control of many manufacturers on a Passive Optical Network (PON) simultaneously, thereby gradually forming the next generation broadband access device control interface. The embodiments of the present disclosure provide a unified and standard programmable architecture of the PON device, which realizes flexible upgrade of the PON access device and minimize the upgrade cost.

It should be pointed out that: the descriptions of the above storage medium and device embodiments are similar to that of the above method embodiments, and have the beneficial effects similar to that of the method embodiments. For technical details not disclosed in the storage medium and device embodiments of the present disclosure, reference is made to the descriptions of the method embodiments of the present disclosure for understanding.

It is to be understood that "one embodiment" and "an embodiment" mentioned in the whole specification mean that specific features, structures or characteristics related to the embodiment are included in at least one embodiment of the present disclosure. Therefore, "in one embodiment" or "in an embodiment" mentioned throughout the specification does not always refer to the same embodiment. In addition, these specific features, structures or characteristics may be combined in one or more embodiments freely as appropriate. It is to be understood that, in each embodiment of the disclosure, the magnitude of the sequence number of each process does not mean an execution sequence, and the execution sequence of each process should be determined by its function and an internal logic and should not form any limit to the implementation of the embodiments of the disclosure. The sequence numbers of the embodiments of the disclosure are adopted not to represent superiority-inferiority of the embodiments but only for description.

It is to be noted that terms "include" and "contain" or any other variant thereof is intended to cover nonexclusive inclusions herein, so that a process, method, object or device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

In some embodiments provided by the present disclosure, it is to be understood that the disclosed device and method may be implemented in another manner. The device embodiments described above are only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected based on a practical requirement to achieve the purposes of the solutions of the embodiments.

In addition, each functional unit in each embodiment of the disclosure may be integrated into a processing unit, each unit may also serve as an independent unit and two or more than two units may also be integrated into a unit. The integrated unit may be implemented in a hardware form and may also be implemented in form of hardware and software functional unit.

Those of ordinary skill in the art should know that all or part of the operations of the method embodiments may be implemented by related hardware instructed through a program, and the program may be stored in a computer-readable storage medium. When the program is executed, the operations of the method embodiments are executed. The storage medium includes: various media capable of storing program codes such as a mobile storage device, a ROM, a magnetic disk or a compact disc.

Or, when being implemented in form of software function module and sold or used as an independent product, the integrated unit of the present disclosure may also be stored in a computer-readable storage medium. Based on such an understanding, the technical solutions of the embodiments of the present disclosure substantially or parts making contributions to the conventional art may be embodied in form of software product, and the computer software product is stored in a storage medium, including a plurality of instructions configured to enable an AC to execute all or part of the method in each embodiment of the present disclosure. The storage medium includes: various media capable of storing program codes such as a mobile hard disk drive, a ROM, a magnetic disk or a compact disc.

The above is only the specific implementation modes of the present disclosure and not intended to limit the protection scope of the present disclosure.

### INDUSTRIAL APPLICABILITY

A management and control subsystem provided in the embodiments of the present disclosure receives a first management and control request for an ONU, extracts an ONU identifier carried in the first management and control request, and sends the first management and control request to a corresponding OMCI subsystem based on the ONU identifier, so that the OMCI subsystem generates an OMCI data packet based on the first management and control request and sends the OMCI data packet to a corresponding OLT device, and the OLT device manages and controls the ONU based on the OMCI data packet. Therefore, coordinated management of an ONU management and control task by the management and control subsystem and the OMCI subsystem is implemented, so that the ONU management and control task may be executed correctly, efficiently and with a low complexity, and the cost of ONU upgrade, maintenance and version unification may be reduced.

## Claims

1. An Optical Network Unit, ONU, management method, performed by a management and control subsystem, **characterized by** the method comprising:
establishing a network topology among the management and control subsystem, at least one ONU Management and Control Interface, OMCI, subsystem, at least one Optical Line Terminal, OLT, device, and at least one ONU;
receiving (S201) a first management and control request for an ONU of the at least one ONU sent by an Element Management System/Software Defined Network, EMS/SDN, control platform;
extracting (S202) an ONU identifier carried in the first management and control request; and
sending (S203) the first management and control request to a corresponding OMCI subsystem of the at least one OMCI subsystem based on the ONU identifier, to enable the OMCI subsystem to generate an OMCI data packet based on the first management and control request and send, based on the ONU identifier, the OMCI data packet to a corresponding OLT device of the at least one OLT device for managing and controlling the ONU based on the OMCI data packet.

2. The method of claim 1, wherein sending (S203) the first management and control request to the OMCI subsystem based on the ONU identifier comprises:
determining (S2031) whether there is a second management and control request with the same ONU identifier in a management and control task list, wherein a task in the management and control task list is an unfinished task;
when there is the second management and control request with the same ONU identifier in the management and control task list, adding (S2032) the first management and control request into the management and control task list; and
when a first response message indicating that execution of the second management and control request is completed is received from the OMCI subsystem, sending (S2033) the first management and control request to the OMCI subsystem.

3. The ONU management method of claim 2, wherein sending (S203) the first management and control request to the OMCI subsystem based on the ONU identifier comprises:
when there is no second management and control request with the same ONU identifier in the management and control task list, sending the first management and control request to the corresponding OMCI subsystem.

4. The method of any one of claims 1 to 3, wherein the management and control subsystem is connected with at least N OMCI subsystems through N message channels, each OMCI subsystem is connected with at least M OLT devices through M message channels, Q physical interfaces of each OLT are connected with Q ONUs, and each management and control subsystem is directly connected with MOLT devices through M message channels, N, M, and Q being integers greater than or equal to 1.

5. The method of claim 4, wherein sending (S203) the first management and control request to the OMCI subsystem based on the ONU identifier comprises:
selecting a corresponding connection between the management and control subsystem and the OMCI subsystem based on the ONU identifier; and
sending the first management and control request to the corresponding OMCI subsystem through the corresponding message channel.

6. An Optical Network Unit, ONU, management method, performed by an ONU Management and Control Interface, OMCI, subsystem, **characterized by** the method comprising:
receiving (S601) a first management and control request for an ONU sent by a management and control subsystem, wherein the first management and control request is sent by an Element Management System/Software Defined Network, EMS/SDN, control platform to the management and control subsystem, and a network topology is established among the management and control subsystem, the OMCI subsystem, at least one Optical Line Terminal, OLT, device, and at least one ONU including the ONU;
extracting (S602) an ONU identifier carried in the first management and control request;
generating (S603) a first management and control execution command from the first management and control request based on the first management and control request;
encapsulating (S604) the first management and control execution command into an ONU Management and Control Interface, OMCI, data packet; and
sending (S605) the OMCI data packet to a corresponding OLT device of the at least one OLT device based on the ONU identifier, to enable the OLT device to manage and control the ONU based on the OMCI data packet.

7. The method of claim 6, further comprising:
receiving from the OLT device a second response message indicating that execution of the first management and control request is completed; and
sending the second response message to the management and control subsystem, to enable the management and control subsystem to determine that execution of the first management and control request is completed.

8. The method of claim 7, wherein sending the second response message to the management and control subsystem comprises:
determining whether an ONU identifier carried in the second response message is the same as the ONU identifier carried in the first management and control request; and
when the ONU identifiers carried in the second response message is the same as that in the first management and control request, sending the second response message to the management and control subsystem through a message channel through which the first management and control request is received.

9. An Optical Network Unit, ONU, management device (800), comprising:
a processor (801); and
a memory (805), configured to store a computer program runnable on the processor;
**characterized in that** the computer program, when executed by the processor (801), implements operations of the ONU management method of any one of claims 1 to 5 or any one of claims 6 to 8.

10. An Optical Network Unit, ONU, management system (900), **characterized by** the system (900) comprising:
a management and control subsystem (901), configured to establishing a network topology among the management and control subsystem (901), at least one ONU Management and Control Interface, OMCI, subsystem, at least one Optical Line Terminal, OLT, device, and at least one ONU, receive a first management and control request for an ONU of the at least one ONU sent by an Element Management System/Software Defined Network, EMS/SDN, control platform, extract an ONU identifier carried in the first management and control request, and send the first management and control request to an OMCI subsystem (902) of the at least one OMCI subsystem based on the ONU identifier;
the OMCI subsystem (902), configured to generate an OMCI data packet based on the first management and control request and send, based on the ONU identifier, the OMCI data packet to an OLT device (903) of the at least one OLT device based on the ONU identifier carried in the first management and control request; and
the OLT device (903), configured to send the OMCI data packet to the ONU, to enable the ONU to execute the first management and control request based on the OMCI data packet.

11. The system (900) of claim 10, wherein the management and control subsystem (901) is configured to determine whether there is a second management and control request with the same ONU identifier in a task list, wherein a task in the task list is an unfinished task, and add the first management and control request into the task list when there is the second management and control request with the same ONU identifier in the task list;
the OMCI subsystem (902) is configured to send, when a first response message indicating that execution of the second management and control request is completed is received, the first response message to the management and control subsystem (901); and
the management and control subsystem (901) is configured to receive the first response message and send the first management and control request to the OMCI subsystem (902).

12. The system (900) of claim 10, wherein the management and control subsystem (901) is configured to send the first management and control request to the corresponding OMCI subsystem (902) when there is no second management and control request with the same ONU identifier in the task list.

13. The system (900) of claim 10, wherein the OLT device (903) is configured to receive from the ONU a second response message indicating that execution of the first management and control request is completed, and send the second response message to the OMCI subsystem (902); and
the OMCI subsystem (902) is configured to send the second response message to the management and control subsystem (901).

14. The system (900) of claim 10, wherein the OMCI subsystem (902) comprises a message channel module, a message-oriented middleware module and an OMCI processing module, wherein the message channel module comprises a message channel corresponding to the first management and control request; correspondingly,
the message channel module is configured to receive the first management and control request sent by the management and control subsystem (901);
the message-oriented middleware module is configured to receive the first management and control request from the message channel corresponding to the first management and control request; and
the OMCI processing module is configured to obtain the first management and control request from the message-oriented middleware module, generate the OMCI data packet based on the first management and control request, and send the OMCI data packet to the corresponding OLT device based on the ONU identifier carried in the first management and control request;
wherein the OMCI processing module is configured to subscribe a message of a first type from the message-oriented middleware module, wherein the message of the first type is a request message obtained by the message-oriented middleware module from the message channel module; and
the message channel module is configured to subscribe a message of a second type from the message-oriented middleware module, wherein the message of the second type is a response message obtained by the message-oriented middleware module through the OMCI processing module; and
wherein the message channel module is further configured to determine whether an ONU identifier carried in the response message is the same as the ONU identifier carried in the first management and control request, and send the response message to the management and control subsystem (901) through the message channel corresponding to the first management and control request when the ONU identifiers are the same.

15. A computer-readable storage medium, having stored a computer-executable instruction therein, wherein the computer-executable instruction is configured to execute operations of the ONU management method of any one of claims 1 to 5 or any one of claims 6 to 8.

## Patentansprüche

1. Verwaltungsverfahren für eine Optische Netzwerkeinheit (ONU), durchgeführt durch ein Verwaltungs- und Steuerungs-Subsystem, **dadurch gekennzeichnet, dass** das Verfahren Folgendes umfasst:
Herstellen einer Netzwerktopologie inmitten des Verwaltungs- und Steuerungs-Subsystems, mindestens eines ONU-Verwaltungs- und -Steuerungsschnittstellen (OMCI) - Subsystems, mindestens einer Optical-Line-Terminal (OLT) -Vorrichtung und mindestens einer ONU;
Empfangen (S201) einer ersten Verwaltungs- und Steuerungsanfrage für eine ONU aus der mindestens einen ONU, die durch eine Element-Management-System/Software-Defined-Network (EMS/SDN) -Steuerungsplattform gesendet wird;
Extrahieren (S202) einer ONU-Kennung, die in der ersten Verwaltungs- und Steuerungsanfrage getragen wird; und
Senden (S203) der ersten Verwaltungs- und Steuerungsanfrage an ein entsprechendes OMCI-Subsystem aus dem mindestens einen OMCI-Subsystem, basierend auf der ONU-Kennung, um zu ermöglichen, dass das OMCI-Subsystem ein OMCI-Datenpaket basierend auf der ersten Verwaltungs- und Steuerungsanfrage generiert und, basierend auf der ONU-Kennung, das OMCI-Datenpaket an eine entsprechende OLT-Vorrichtung aus der mindestens einen OLT-Vorrichtung zum Verwalten und Steuern der ONU basierend auf dem OMCI-Datenpaket sendet.

2. Verfahren nach Anspruch 1, wobei das Senden (S203) der ersten Verwaltungs- und Steuerungsanfrage an das OMCI-Subsystem basierend auf der ONU-Kennung Folgendes umfasst:
Bestimmen (S2031), ob es eine zweite Verwaltungs- und Steuerungsanfrage mit derselben ONU-Kennung in einer Verwaltungs- und Steuerungs-Aufgabenliste gibt, wobei eine Aufgabe in der Verwaltungs- und Steuerungs-Aufgabenliste eine unvollendete Aufgabe ist;
wenn es die zweite Verwaltungs- und Steuerungsanfrage mit derselben ONU-Kennung in der Verwaltungs- und Steuerungs-Aufgabenliste gibt, Hinzufügen (S2032) der ersten Verwaltungs- und Steuerungsanfrage in die Verwaltungs- und Steuerungs-Aufgabenliste; und
wenn eine erste Antwortnachricht, die angibt, dass eine Ausführung der zweiten Verwaltungs- und Steuerungsanfrage fertiggestellt ist, von dem OMCI-Subsystem empfangen wird, Senden (S2033) der erste Verwaltungs- und Steuerungsanfrage an das OMCI-Subsystem.

3. ONU-Verwaltungsverfahren nach Anspruch 2, wobei das Senden (S203) der ersten Verwaltungs- und Steuerungsanfrage an das OMCI-Subsystem basierend auf der ONU-Kennung Folgendes umfasst:
wenn es keine zweite Verwaltungs- und Steuerungsanfrage mit derselben ONU-Kennung in der Verwaltungs- und Steuerungs-Aufgabenliste gibt, Senden der ersten Verwaltungs- und Steuerungsanfrage an das entsprechende OMCI-Subsystem.

4. Verfahren nach einem der Ansprüche 1 bis 3, wobei das Verwaltungs- und Steuerungs-Subsystem mit mindestens N OMCI-Subsystemen durch N Nachrichtenkanäle verbunden ist, jedes OMCI-Subsystem mit mindestens M OLT-Vorrichtungen durch M Nachrichtenkanäle verbunden ist, Q physikalische Schnittstellen von jedem OLT mit Q ONUs verbunden sind und jedes Verwaltungs- und Steuerungs-Subsystem mit M OLT-Vorrichtungen durch M Nachrichtenkanäle unmittelbar verbunden ist, wobei N, M und Q Ganzzahlen größer als oder gleich wie 1 sind.

5. Verfahren nach Anspruch 4, wobei das Senden (S203) der ersten Verwaltungs- und Steuerungsanfrage an das OMCI-Subsystem basierend auf der ONU-Kennung Folgendes umfasst:
Auswählen einer entsprechenden Verbindung zwischen dem Verwaltungs- und Steuerungs-Subsystem und dem OMCI-Subsystem basierend auf der ONU-Kennung; und
Senden der ersten Verwaltungs- und Steuerungsanfrage an das entsprechende OMCI-Subsystem durch den entsprechenden Nachrichtenkanal.

6. Verwaltungsverfahren für eine Optische Netzwerkeinheit (ONU), durchgeführt durch ein ONU-Verwaltungs- und -Steuerungsschnittstellen (OMCI) -Subsystem, **dadurch gekennzeichnet, dass** das Verfahren Folgendes umfasst:
Empfangen (S601) einer ersten Verwaltungs- und Steuerungsanfrage für eine ONU, die durch ein Verwaltungs- und Steuerungs-Subsystem gesendet wird, wobei die erste Verwaltungs- und Steuerungsanfrage durch eine Element-Management-System/Software-Defined-Network (EMS/SDN) -Steuerungsplattform an das Verwaltungs- und Steuerungs-Subsystem gesendet wird und eine Netzwerktopologie hergestellt wird inmitten des Verwaltungs- und Steuerungs-Subsystems, des OMCI-Subsystem, mindestens einer Optical-Line-Terminal (OLT) -Vorrichtung und mindestens einer ONU einschließlich der ONU;
Extrahieren (S602) einer ONU-Kennung, die in der ersten Verwaltungs- und Steuerungsanfrage getragen wird;
Generieren (S603) eines ersten Verwaltungs- und Steuerungs-Ausführungsbefehls von der ersten Verwaltungs- und Steuerungsanfrage basierend auf der ersten Verwaltungs- und Steuerungsanfrage;
Einkapseln (S604) des ersten Verwaltungs- und Steuerungs-Ausführungsbefehls in ein ONU-Verwaltungs- und -Steuerungsschnittstellen (OMCI) -Datenpaket; und
Senden (S605) des OMCI-Datenpakets an eine entsprechende OLT-Vorrichtung aus der mindestens einen OLT-Vorrichtung basierend auf der ONU-Kennung, um zu ermöglichen, dass die OLT-Vorrichtung die ONU basierend auf dem OMCI-Datenpaket verwaltet und steuert.

7. Verfahren nach Anspruch 6, ferner umfassend:
Empfangen von der OLT-Vorrichtung einer zweiten Antwortnachricht, die angibt, dass die Ausführung der ersten Verwaltungs- und Steuerungsanfrage fertiggestellt ist; und
Senden der zweiten Antwortnachricht an das Verwaltungs- und Steuerungs-Subsystem, um zu ermöglichen, dass das Verwaltungs- und Steuerungs-Subsystem bestimmt, dass eine Ausführung der ersten Verwaltungs- und Steuerungsanfrage fertiggestellt ist.

8. Verfahren nach Anspruch 7, wobei das Senden der zweiten Antwortnachricht an das Verwaltungs- und Steuerungs-Subsystem Folgendes umfasst:
Bestimmen, ob eine ONU-Kennung, die in der zweiten Antwortnachricht getragen wird, dieselbe wie die ONU-Kennung ist, die in der ersten Verwaltungs- und Steuerungsanfrage getragen wird; und
wenn die ONU-Kennungen, die in der zweiten Antwortnachricht getragen werden, dieselben wie die in der ersten Verwaltungs- und Steuerungsanfrage sind, Senden der zweiten Antwortnachricht an das Verwaltungs- und Steuerungs-Subsystem durch einen Nachrichtenkanal, durch den die erste Verwaltungs- und Steuerungsanfrage empfangen wird.

9. Verwaltungsvorrichtung (800) für eine optische Netzwerkeinheit (ONU), umfassend:
einen Prozessor (801); und
einen Speicher (805), der konfiguriert ist, um ein Computerprogramm zu speichern, das auf dem Prozessor ausgeführt werden kann;
**dadurch gekennzeichnet, dass** das Computerprogramm, wenn es durch den Prozessor (801) ausgeführt wird, Vorgänge des ONU-Verwaltungsverfahrens nach einem der Ansprüche 1 bis 5 oder nach einem der Ansprüche 6 bis 8 implementiert.

10. Verwaltungssystem (900) für eine optische Netzwerkeinheit (ONU), **dadurch gekennzeichnet, dass** das System (900) Folgendes umfasst:
ein Verwaltungs- und Steuerungs-Subsystem (901), das konfiguriert ist, um eine Netzwerktopologie inmitten des Verwaltungs- und Steuerungs-Subsystems (901), mindestens eines ONU-Verwaltungs- und -Steuerungsschnittstellen (OMCI) -Subsystems, mindestens einer Optical-Line-Terminal (OLT) -Vorrichtung und mindestens einer ONU herzustellen, eine erste Verwaltungs- und Steuerungsanfrage für eine ONU aus der mindestens einen ONU, die durch eine Element-Management-System/Software-Defined-Network (EMS/SDN) - Steuerungsplattform gesendet wird, zu empfangen, eine ONU-Kennung, die in der ersten Verwaltungs- und Steuerungsanfrage getragen wird, zu extrahieren und die erste Verwaltungsund Steuerungsanfrage an ein OMCI-Subsystem (902) aus dem mindestens einen OMCI-Subsystem basierend auf der ONU-Kennung zu senden;
das OMCI-Subsystem (902), das konfiguriert ist, um ein OMCI-Datenpaket basierend auf der ersten Verwaltungs- und Steuerungsanfrage zu generieren und, basierend auf der ONU-Kennung, das OMCI-Datenpaket an eine OLT-Vorrichtung (903) aus der mindestens einen OLT-Vorrichtung basierend auf der ONU-Kennung, die in der ersten Verwaltungs- und Steuerungsanfrage getragen wird, zu senden; und
die OLT-Vorrichtung (903), die konfiguriert ist, um das OMCI-Datenpaket an die ONU zu senden, um zu ermöglichen, dass die ONU die erste Verwaltungs- und Steuerungsanfrage basierend auf dem OMCI-Datenpaket ausführt.

11. System (900) nach Anspruch 10, wobei das Verwaltungs- und Steuerungs-Subsystem (901) konfiguriert ist, um zu bestimmen, ob es eine zweite Verwaltungs- und Steuerungsanfrage mit derselben ONU-Kennung in einer Aufgabenliste gibt, wobei eine Aufgabe in der Aufgabenliste eine unvollendete Aufgabe ist, und die erste Verwaltungs- und Steuerungsanfrage in die Aufgabenliste hinzuzufügen, wenn die zweite Verwaltungs- und Steuerungsanfrage mit derselben ONU-Kennung in der Aufgabenliste ist;
das OMCI-Subsystem (902) konfiguriert ist, um, wenn eine erste Antwortnachricht, die angibt, dass die Ausführung der zweiten Verwaltungs- und Steuerungsanfrage fertiggestellt ist, empfangen wird, die erste Antwortnachricht an das Verwaltungs- und Steuerungs-Subsystem (901) zu senden; und
das Verwaltungs- und Steuerungs-Subsystem (901) konfiguriert ist, um die erste Antwortnachricht zu empfangen und die erste Verwaltungs- und Steuerungsanfrage an das OMCI-Subsystem (902) zu senden.

12. System (900) nach Anspruch 10, wobei das Verwaltungs- und Steuerungs-Subsystem (901) konfiguriert ist, um die erste Verwaltungs- und Steuerungsanfrage an das entsprechende OMCI-Subsystem (902) zu senden, wenn es keine zweite Verwaltungs- und Steuerungsanfrage mit derselben ONU-Kennung in der Aufgabenliste gibt.

13. System (900) nach Anspruch 10, wobei die OLT-Vorrichtung (903) konfiguriert ist, um von der ONU eine zweite Antwortnachricht zu empfangen, die angibt, dass die Ausführung der ersten Verwaltungs- und Steuerungsanfrage fertiggestellt ist, und die zweite Antwortnachricht an das OMCI-Subsystem (902) zu senden; und
das OMCI-Subsystem (902) konfiguriert ist, um die zweite Antwortnachricht an das Verwaltungs- und Steuerungs-Subsystem (901) zu senden.

14. System (900) nach Anspruch 10, wobei das OMCI-Subsystem (902) ein Nachrichtenkanalmodul, ein nachrichtenorientiertes Middleware-Modul und ein OMCI-Verarbeitungsmodul umfasst, wobei das Nachrichtenkanalmodul einen Nachrichtenkanal umfasst, der der ersten Verwaltungs- und Steuerungsanfrage entspricht; dementsprechend
ist das Nachrichtenkanalmodul konfiguriert, um die erste Verwaltungs- und Steuerungsanfrage zu empfangen, die durch das Verwaltungs- und Steuerungs-Subsystem (901) gesendet wird;
ist das nachrichtenorientierte Middleware-Modul konfiguriert, um die erste Verwaltungs- und Steuerungsanfrage von dem Nachrichtenkanal entsprechend der ersten Verwaltungs- und Steuerungsanfrage zu empfangen; und
ist das OMCI-Verarbeitungsmodul konfiguriert, um die erste Verwaltungs- und Steuerungsanfrage von dem nachrichtenorientierten Middleware-Modul zu erhalten, das OMCI-Datenpaket basierend auf der ersten Verwaltungs- und Steuerungsanfrage zu generieren und das OMCI-Datenpaket an die entsprechende OLT-Vorrichtung basierend auf der ONU-Kennung zu senden, die in der ersten Verwaltungs- und Steuerungsanfrage getragen wird;
wobei das OMCI-Verarbeitungsmodul konfiguriert ist, um eine Nachricht einer ersten Art von dem nachrichtenorientierten Middleware-Modul zu abonnieren, wobei die Nachricht der ersten Art eine Anfragennachricht ist, die durch das nachrichtenorientierte Middleware-Modul von dem Nachrichtenkanalmodul erhalten wird; und
das Nachrichtenkanalmodul konfiguriert ist, um eine Nachricht einer zweiten Art von dem nachrichtenorientierten Middleware-Modul zu abonnieren, wobei die Nachricht der zweiten Art eine Antwortnachricht ist, die von dem nachrichtenorientierten Middleware-Modul durch das OMCI-Verarbeitungsmodul erhalten wird; und
wobei das Nachrichtenkanalmodul ferner konfiguriert ist, um zu bestimmen, ob eine ONU-Kennung, die in der Antwortnachricht getragen wird, dieselbe wie die ONU-Kennung ist, die in der ersten Verwaltungs- und Steuerungsanfrage getragen wird, und die Antwortnachricht an das Verwaltungs- und Steuerungs-Subsystem (901) durch den Nachrichtenkanal zu senden, der der ersten Verwaltungs- und Steuerungsanfrage entspricht, wenn die ONU-Kennungen gleich sind.

15. Computerlesbares Speichermedium, das darin eine von einem Computer ausführbare Anweisung gespeichert hat, wobei die von einem Computer ausführbare Anweisung konfiguriert ist, um Vorgänge des ONU-Verwaltungsverfahrens nach einem der Ansprüche 1 bis 5 oder einem der Ansprüche 6 bis 8 auszuführen.

## Revendications

1. Procédé de gestion d'unité de réseau optique (ONU, optical network unit) réalisé par un sous-système de gestion et de commande, le procédé étant **caractérisé en ce qu'**il comprend :
l'établissement d'une topologie de réseau entre le sous-système de gestion et de commande, au moins un sous-système d'interface de gestion et de commande d'ONU (OMCI, ONU management and control interface), au moins un dispositif de terminal de ligne optique (OLT, optical line terminal) et au moins une ONU ;
la réception (S201) d'une première demande de gestion et de commande, relative à une ONU parmi l'au moins une ONU, envoyée par une plate-forme de commande de système de gestion d'éléments/réseau défini par logiciel (EMS/SDN, element management system/software-defined network) ;
l'extraction (S202) d'un identifiant d'ONU indiqué dans la première demande de gestion et de commande ; et
l'envoi (S203) de la première demande de gestion et de commande à un sous-système d'OMCI correspondant parmi l'au moins un sous-système d'OMCI en fonction de l'identifiant d'ONU, pour permettre au sous-système d'OMCI de générer un paquet de données d'OMCI en fonction de la première demande de gestion et de commande et d'envoyer, en fonction de l'identifiant d'ONU, le paquet de données d'OMCI à un dispositif d'OLT correspondant parmi l'au moins un dispositif d'OLT pour gérer et commander l'ONU en fonction du paquet de données d'OMCI.

2. Procédé selon la revendication 1, dans lequel l'envoi (S203) de la première demande de gestion et de commande au sous-système d'OMCI en fonction de l'identifiant d'ONU comprend :
la détermination (S2031) du fait ou non qu'une deuxième demande de gestion et de commande portant le même identifiant d'ONU se trouve dans une liste de tâches de gestion et de commande, ladite tâche présente dans la liste de tâches de gestion et de commande étant une tâche non terminée ;
lorsque la deuxième demande de gestion et de commande portant le même identifiant d'ONU se trouve dans la liste de tâches de gestion et de commande, l'ajout (S2032) de la première demande de gestion et de commande à la liste de tâches de gestion et de commande ; et
lorsqu'un premier message de réponse, indiquant que l'exécution de la deuxième demande de gestion et de commande est terminée, est reçu en provenance du sous-système d'OMCI, l'envoi (S2033) de la première demande de gestion et de commande au sous-système d'OMCI.

3. Procédé de gestion d'ONU selon la revendication 2, dans lequel l'envoi (S203) de la première demande de gestion et de commande au sous-système d'OMCI en fonction de l'identifiant d'ONU comprend :
lorsqu'il ne se trouve pas de deuxième demande de gestion et de commande portant le même identifiant d'ONU dans la liste de tâches de gestion et de commande, l'envoi de la première demande de gestion et de commande au sous-système d'OMCI correspondant.

4. Procédé selon l'une quelconque des revendications 1 à 3, dans lequel le sous-système de gestion et de commande est connecté à au moins N sous-systèmes d'OMCI par N canaux de messages, chaque sous-système d'OMCI est connecté à au moins M dispositifs d'OLT par M canaux de messages, Q interfaces physiques de chaque OLT sont connectées à Q ONU, et chaque sous-système de gestion et de commande est directement connecté à M dispositifs d'OLT par M canaux de messages ; N, M et Q étant des nombres entiers supérieurs ou égaux à 1.

5. Procédé selon la revendication 4, dans lequel l'envoi (S203) de la première demande de gestion et de commande au sous-système d'OMCI en fonction de l'identifiant d'ONU comprend :
la sélection d'une connexion correspondante entre le sous-système de gestion et de commande et le sous-système d'OMCI en fonction de l'identifiant d'ONU, et
l'envoi de la première demande de gestion et de commande au sous-système d'OMCI correspondant par le biais du canal de message correspondant.

6. Procédé de gestion d'unité de réseau optique (ONU, optical network unit), réalisé par un sous-système d'interface de gestion et de commande d'ONU (OMCI, ONU management and control interface), le procédé étant **caractérisé en ce qu'**il comprend :
la réception (S601) d'une première demande de gestion et de commande, relative à une ONU, envoyée par un sous-système de gestion et de commande, la première demande de gestion et de commande étant envoyée par une plate-forme de commande de système de gestion d'éléments/réseau défini par logiciel (EMS/SDN, element management system/software-defined network) au sous-système de gestion et de commande, et une topologie de réseau étant établie entre le sous-système de gestion et de commande, le sous-système d'OMCI, au moins un dispositif de terminal de ligne optique (OLT, optical line terminal) et au moins une ONU dont ladite ONU ;
l'extraction (S602) d'un identifiant d'ONU indiqué dans la première demande de gestion et de commande ;
la génération (S603) d'une première commande d'exécution de gestion et de commande à partir de la première demande de gestion et de commande en fonction de la première demande de gestion et de commande ;
l'encapsulation (S604) de la première commande d'exécution de gestion et de commande dans un paquet de données d'interface de gestion et de commande d'ONU (OMCI, ONU management and control interface) ; et
l'envoi (S605) du paquet de données d'OMCI à un dispositif d'OLT correspondant parmi l'au moins un dispositif d'OLT en fonction de l'identifiant d'ONU, pour permettre au dispositif d'OLT de gérer et de commander l'ONU en fonction du paquet de données d'OMCI.

7. Procédé selon la revendication 6, comprenant en outre :
la réception, en provenance du dispositif d'OLT, d'un deuxième message de réponse indiquant que l'exécution de la première demande de gestion et de commande est terminée ; et
l'envoi du deuxième message de réponse au sous-système de gestion et de commande, pour permettre au sous-système de gestion et de commande de déterminer que l'exécution de la première demande de gestion et de commande est terminée.

8. Procédé selon la revendication 7, dans lequel l'envoi du deuxième message de réponse au sous-système de gestion et de commande comprend :
la détermination du fait ou non qu'un identifiant d'ONU indiqué dans le deuxième message de réponse est le même que l'identifiant d'ONU indiqué dans la première demande de gestion et de commande ; et
lorsque les identifiants d'ONU indiqués dans le deuxième message de réponse sont les mêmes que ceux indiqués dans la première demande de gestion et de commande, l'envoi du deuxième message de réponse au sous-système de gestion et de commande par le biais d'un canal de message par lequel la première demande de gestion et de commande a été reçue.

9. Dispositif (800) de gestion d'unité de réseau optique (ONU, optical network unit) comprenant :
un processeur (801), et
une mémoire (805) conçue pour stocker un programme informatique pouvant être exécuté par le processeur ;
**caractérisé en ce que** le programme informatique, lorsqu'il est exécuté par le processeur (801), met en oeuvre les opérations du procédé de gestion d'ONU selon l'une quelconque des revendications 1 à 5 ou l'une quelconque des revendications 6 à 8.

10. Système (900) de gestion d'unité de réseau optique (ONU, optical network unit), le système (900) étant **caractérisé en ce qu'**il comprend :
un sous-système de gestion et de commande (901) conçu pour établir une topologie de réseau entre le sous-système de gestion et de commande (901), au moins un sous-système d'interface de gestion et de commande d'ONU (OMCI, ONU management and control interface), au moins un dispositif de terminal de ligne optique (OLT, optical line terminal) et au moins une ONU, pour recevoir une première demande de gestion et de commande, relative à une ONU parmi l'au moins une ONU, envoyée par une plate-forme de commande de système de gestion d'éléments/réseau défini par logiciel (EMS/SDN, élément management system/software-defined network), pour extraire un identifiant d'ONU indiqué dans la première demande de gestion et de commande, et pour envoyer la première demande de gestion et de commande à un sous-système d'OMCI (902) parmi l'au moins un sous-système d'OMCI en fonction de l'identifiant d'ONU ;
le sous-système d'OMCI (902) conçu pour générer un paquet de données d'OMCI en fonction de la première demande de gestion et de commande, et pour envoyer, en fonction de l'identifiant d'ONU, le paquet de données d'OMCI à un dispositif d'OLT (903) parmi l'au moins un dispositif d'OLT en fonction de l'identifiant d'ONU indiqué dans la première demande de gestion et de commande ; et
le dispositif d'OLT (903) conçu pour envoyer le paquet de données d'OMCI à l'ONU, pour permettre à l'ONU d'exécuter la première demande de gestion et de commande en fonction du paquet de données d'OMCI.

11. Système (900) selon la revendication 10, dans lequel le sous-système de gestion et de commande (901) est conçu pour déterminer si une deuxième demande de gestion et de commande portant le même identifiant d'ONU se trouve dans une liste de tâches, une tâche présente dans ladite liste de tâches étant une tâche non terminée, et pour ajouter la première demande de gestion et de commande à la liste de tâches lorsque la deuxième demande de gestion et de commande portant le même identifiant d'ONU se trouve dans la liste de tâches ;
le sous-système d'OMCI (902) est conçu pour envoyer le premier message de réponse au sous-système de gestion et de commande (901) lorsqu'il est reçu un premier message de réponse indiquant que l'exécution de la deuxième demande de gestion et de commande est terminée ; et
le sous-système de gestion et de commande (901) est conçu pour recevoir le premier message de réponse et pour envoyer la première demande de gestion et de commande au sous-système d'OMCI (902).

12. Système (900) selon la revendication 10, dans lequel le sous-système de gestion et de commande (901) est conçu pour envoyer la première demande de gestion et de commande au sous-système d'OMCI (902) correspondant lorsqu'il ne se trouve pas de deuxième demande de gestion et de commande portant le même identifiant d'ONU dans la liste de tâches.

13. Système (900) selon la revendication 10, dans lequel le dispositif d'OLT (903) est conçu pour recevoir en provenance de l'ONU un deuxième message de réponse indiquant que la première demande de gestion et de commande est terminée, et pour envoyer le deuxième message de réponse au sous-système d'OMCI (902) ; et
le sous-système d'OMCI (902) est conçu pour envoyer le deuxième message de réponse au sous-système de gestion et de commande (901).

14. Système (900) selon la revendication 10, dans lequel le sous-système d'OMCI (902) comprend un module de canal de message, un module intergiciel orienté message et un module de traitement d'OMCI, ledit module de canal de message comprenant un canal de message correspondant à la première demande de gestion et de commande ; en conséquence de quoi :
le module de canal de message est conçu pour recevoir la première demande de gestion et de commande envoyée par le sous-système de gestion et de commande (901) ;
le module intergiciel orienté message est conçu pour recevoir la première demande de gestion et de commande en provenance du canal de message correspondant à la première demande de gestion et de commande ; et
le module de traitement d'OMCI est conçu pour obtenir la première demande de gestion et de commande en provenance du module intergiciel orienté message, pour générer le paquet de données d'OMCI en fonction de la première demande de gestion et de commande, et pour envoyer le paquet de données d'OMCI au dispositif d'OLT correspondant en fonction de l'identifiant d'ONU indiqué dans la première demande de gestion et de commande ;
ledit module de traitement d'OMCI étant conçu pour souscrire un message d'un premier type en provenance du module intergiciel orienté message, le message de premier type étant un message de réponse obtenu par le module intergiciel orienté message en provenance du module de canal de message ; et
ledit module de canal de message étant conçu pour souscrire un message d'un deuxième type provenant du module intergiciel orienté message, le message de deuxième type étant un message de réponse obtenu par le module intergiciel orienté message par le biais du module de traitement d'OMCI ; et
ledit module de canal de message étant en outre conçu pour déterminer si un identifiant d'ONU indiqué dans le message de réponse est le même que l'identifiant d'ONU indiqué dans la première demande de gestion et de commande, et pour envoyer le message de réponse au sous-système de gestion et de commande (901) par le biais du canal de message correspondant à la première demande de gestion et de commande lorsque les identifiants d'ONU sont les mêmes.

15. Support de stockage lisible par ordinateur, sur lequel est stockée une instruction exécutable par ordinateur, ladite instruction exécutable par ordinateur étant conçue pour exécuter les opérations du procédé de gestion d'ONU selon l'une quelconque des revendications 1 à 5 ou l'une quelconque des revendications 6 à 8.
